# EUROPÄISCHE PATENTSCHRIFT

(11) **EP 0 733 493 B1**
(45) Veröffentlichungstag und Bekanntmachung des Hinweises auf die Patenterteilung: **21.11.2001**
(21) Anmeldenummer: 96104323.9
(22) Anmeldetag: 19.03.1996
(51) Int. Cl.: B60B 17/00

(54) **Gummigefedertes Schienenrad**
Rubber sprung railway-wheel
Roue ferroviaire à suspension élastique en caoutchouc

(30) Priorität: 21.03.1995 DE 19510165
(43) Veröffentlichungstag der Anmeldung: 25.09.1996
(73) Patentinhaber: Gutehoffnungshütte Radsatz GmbH, 46145 Oberhausen (DE)
(72) Erfinder: Bültena, Ralf, 45966 Gladbeck (DE); Hesselmann, Wolfgang, 46149 Oberhausen (DE); Weber, Wolfgang, 46147 Oberhausen (DE); Gerlach, Thomas, 47506 Neukirchen-Vluyn (DE)
(74) Vertreter: Patentanwälte Dr. Solf & Zapf

(56) Entgegenhaltungen:
- EP-A- 0 034 911
- EP-A- 0 679 540
- DE-A- 3 713 270
- DE-A- 4 125 885
- DE-B- 1 118 472
- DE-C- 483 218
- DE-C- 3 136 275
- FR-A- 2 228 631
- US-A- 3 127 211

## Beschreibung

Die Erfindung betrifft ein gummigefedertes, mehrteiliges Schienenrad mit zwischen dem aus Stahl geschmiedeten Radreifen und dem Scheibenradkörper angeordneten mehrteiligen Gummiringen, wobei mindestens ein Gummiring mit einem Spannring zwischen dem geschmiedeten Radreifen und dem Scheibenradkörper verspannt ist und der Spannring mit Befestigungsschrauben am Umfang des Scheibenradkörpers lösbar befestigt ist.

Mehrteilige, gummigefederte Schienenräder mit Spurkranz für gleisgeführte Wagen und Fahrzeuge werden in der Regel hergestellt, um die durch Unebenheiten, Vibrationen sowie durch hohe Umdrehungszahlen entstehenden Druckspitzen auf den Laufflächen der aus Stahl geachmiedeten Radreifen abzubauen und um dadurch den Verschleiß an den Schienenrädern und den Schienen, d.h. dem Oberbaumaterial des Gleiskörpers, zu vermindern und um gleichzeitig die Laufgeräusche durch geeignete Dämpfungsmaßnahmen am Schienenrad zu reduzieren.

Aus der DE-C-37 13 270 ist ein gummigefedertes Schienenrad bekannt, bei dem durch seitliche Schultern gebildete Ringnuten des Radreifens und der Radfelge vorgespannte Gummikörper angeordnet werden, wobei zwischen Radreifen und Radfelge ein umlaufender Ringspalt belassen ist und ein axialer Ringkragen radial gegenüber der Schulter zur Radachse versetzt angeordnet ist. Der Radreifen und die Radfelge, sind beide aus geschmiedetem bzw. gewalztem Stahl hergestellt.

Aus der DE-A-41 25 885 ist ein Eisenbahnrad - bestehend aus Nabe, Speichen und Reifen mit Spurkranz - bekannt, bei dem die Nabe über Speichen mit einem Speichenreifen fest verbunden ist. Auf dem Speichenreifen ist radial eine Hartgummilage anvulkanisiert, die konzentrisch angeordnet ist und an die radial ein äußerer Laufreifen mit Spurkranz anschließt. In axialer Richtung ist die einteilige Hartgummilage spurkranzseitig durch einen Sprengring und auf der Gegenseite durch einen an dem Laufreifen vorgesehenen Steg begrenzt.

Bekannt ist darüber hinaus ein gummigefedertes Schienenrad mit jeweils aus Stahl geschmiedetem Scheibenradkörper und einem gewalzten Radreifen mit Spurkranz. Zwischen Radreifen und Scheibenradkörper werden bei diesem Rad zwei Hartgummiringe mittels eines Ringes verspannt. Der Ring wird durch eine Anzahl von Schrauben an der Radscheibe gehalten. Der Spannring ist ebenfalls aus Stahl hergestellt. Nachteilig bei diesem bekannten gummigefederten Schienenrad sind das hohe Eigengewicht durch den ausschließlich aus Stahl hergestellten Radkörper und die nicht befriedigenden Dämpfungseigenschaften von Laufgeräuschen durch Unebenheiten, Vibrationen zwischen Schienenrad und Schiene sowie durch hohe Umdrehungszahlen der Schienenradsätze.

In der DE-C-483 218 ist darüber hinaus ein Radsatz aus Leichtmetall für Schienenfahrzeuge beschrieben, wobei eine Radscheibe oder ein Radstern aus Leichtmetall mit einem Radkranz aus Mangan oder ähnlichem Hartstahl und einer gegebenenfalls hohlen Achse aus Leichtmetall kombiniert ist. Aus der DE-B-11 18 472 ist ebenso die Verwendung von vergüteten Aluminiumlegierungen als Werkstoffe für Schienenfahrzeugräder mit einem auf die Leichtmetallradscheibe aufgeschrumpften Stahlradkranz bekannt. In beiden Fällen ist allerdings von einer Gummifederung dieser Schienenräder nicht die Rede.

Ein Schienenrad der eingangs genannten Art ist aus der DE-C-31 36 275 bekannt. Dieses gummigefedertes Schienenrad weist zwischen dem aus Stahl geschmiedeten Radreifen und der Radscheibe zu mindestens einem Ring angeordnete Gummikörper und mindestens einen Schallabsorber auf, wobei der Radreifen und/oder die Radscheibe mindestens eine, von den Gummikörpern übergriffene, umlaufende Nut aufweisen (aufweist), in welcher der Schallabsorber angeordnet und durch die Gummikörper vorgespannt ist.

Des weiteren ist ein gummigefedertes Schienenrad der eingangs genannten Art ist aus der US-A-3 127 211 bekannt. Auch dieses bekannte Schienenrad weist einen aus Stahl geschmiedeten Radreifen, einen Scheibenradkörper, mindestens einen zwischen dem Radreifen und dem Scheibenradkörper angeordneten Gummiring und mindestens einen keilförmigen Spannring zwischen dem Radreifen und dem Scheibenradkörper auf, der mit Befestigungsschrauben am Umfang des Scheibenradkörpers lösbar befestigt ist.

Schließlich ist aus der FR-A-2 228 631 ein Schienenrad in Leichtbauweise mit einem Scheibenradkörper und einem auf der Radfelge aufgespannten Radreifen bekannt, bei dem die Radscheibe eine tangentiale, sich aus radial verlaufenden Wellenbergen und Wellentälern zusammensetzende Wellung aufweist, wobei zwischen einer inneren umlaufenden Nut des Radreifens und einer äußeren umlaufenden Nut der Radfelge eine unter Vorspannung stehende Gummieinlage angeordnet ist und wobei die Radscheibe eine radial ungewellte konische Grundform aufweist.

Der Erfindung liegt die Aufgabe zugrunde, durch geeignete Werkstoffwahl einerseits eine Gewichtseinsparung und andererseits eine Verbesserung der akustischen Eigenschaften, insbesondere verbesserte Dämpfungseigenschaften, eines gummigefederten Schienenrades der eingangs genannten Art im Vergleich mit den bekannten Rädern aus eisenhaltigen Werkstoffen zu erzielen.

Dies wird erfindungsgemäß dadurch erreicht, daß der Scheibenradkörper und die Radnabe aus einem nichteisenhaltigen Werkstoff oder einem Verbundwerkstoff bestehen und daß auch der Spannring aus einem nichteisenhaltigen Werkstoff oder einem Verbundwerkstoff besteht.

Weitere, vorteilhafte Ausgestaltungsmerkmale der Erfindung sind den abhangigen Ansprüchen und der nachfolgenden Beschreibung zu entnehmen.

Ein erfindungsgemäßes Schienenrad besteht somit im wesentlichen aus einem Scheibenradkörper, einem Radreifen, einem Spannring und Gummiringen. Die Gummiringe können aus Natur- oder Kunstgummi hergestellt sein. Durch den Spannring werden die Gummiringe zwischen der Radscheibe und dem Radreifen vorgespannt. Schrauben halten den Spannring am Umfang der Radscheibe. Die Vorteile des erfindungsgemäßen Schienenrades bestehen darin, daß durch den Einsatz von nichteisenhaltigen Werkstoffen und Verbundstoffen das Gewicht des Schienenrades vermindert wird. Als Werkstoffe für Scheibenradkörper, Radnabe und Spannring kommen dabei alle geeigneten Materialien in Frage, die wegen ihrer Dichte im Vergleich zu geschmiedeten bzw. gewalzten eisenhaltigen Werkstoffen eine Gewichtsverminderung des Rades zulassen und die notwendigen Festigkeitseigenschaften besitzen. Derartige Werkstoffe sind beispielsweise Aluminiumlegierungen, Aluminium-Verbundwerkstoffe, faser- oder partikelverstärkt, sowie sonstige NE-Legierungen oder ein anderer Verbundwerkstoff aus verstärkten Kohlefaserwerkstoffen. Die akustischen Eigenschaften der genannten Werkstoffe beeinflussen das Dämpfungsverhalten des Schienenrades positiv gegenüber Rädern aus eisenhaltigen Werkstoffen.

Durch die Ausbildung sowohl des Spannringes als auch eines Ringes zwischen den Gummiringen und dem äußeren Radreifen aus Leichtmetall kann eine erhebliche Gewichtsreduzierung und Verbesserung der Dämpfungseigenschaften erreicht werden. Die Verbindung des verbleibenden Radreifens mit dem Ring erfolgt zweckmäßigerweise durch einen Längs- oder Querpreßverband (Schrumpfverband), um eine ausreichende Lagesicherung gegen die auftretenden Radkräfte zu bewerkstelligen. Der Ring kann durch Walzen hergestellt oder an den Radreifen angegossen werden. Zur Lagesicherung können zusätzlich Haltenasen am Radreifen angeordnet sein.

Die Kontaktflächen zwischen dem Spannring zur Sicherung der Gummiringe und dem Scheibenradkörper können vorteilhafterweise mit einer Beschichtung versehen werden, die in die Flächen eingelagert und mit ihnen dauerhaft verbunden ist. Zweck dieser Beschichtung ist die Vermeidung von Kontaktkorrosion und bei der Montage und Demontage auftretenden Preß- und Fügeschäden an den Kontaktflächen. Diese Beschichtung zur Trennung der Kontaktflächen ist insbesondere bei Verwendung gleicher Werkstoffe wichtig. Mit dieser Beschichtung kann gegebenenfalls auf den Einsatz zusätzlicher, kurzlebiger Schmiermittel verzichtet werden. Die Beschichtung kann z.B. aus einem Gemisch aus Schmierpigmenten, Kunststoffen, Metallen oder Metalloxiden und geeigneten Bindemitteln bestehen.

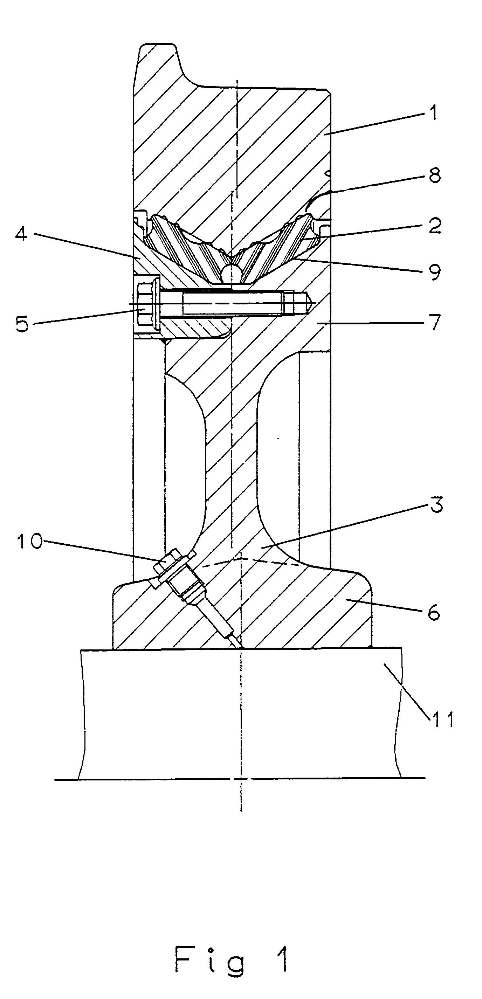

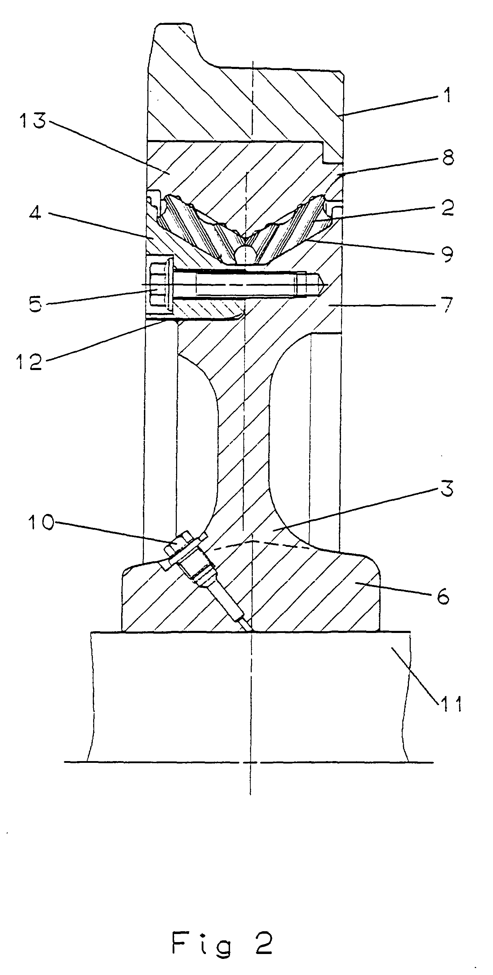

Die Erfindung wird anhand der beigefügten Figuren 1 und 2 beispielsweise näher erläutert.

Das mehrteilige, gummigefederte Schienenrad besteht nach Fig. 1 aus einem aus Stahl geschmiedeten bzw. gewalzten Radreifen (1) mit Spurkranz und einem aus einer Aluminiumlegierung oder einem anderen der zuvor erwähnten Werkstoffe hergestellten Scheibenradkörper (3) mit Radnabe (6).

In dem Radreifen (1) sind Aussparungen (8) und in dem Scheibenradkörper (3) sind Nuten (9) zum Einlegen von Gummiringen (2) zwischen den Bauteilen (1) und (3, 7) vorgesehen.

Mindestens einer der beiden Gummiringe (2) wird bei geteilter Ausführung durch einen keilförmigen Spannring (4) zwischen der Radscheibe (3) und dem Radreifen (1) mit Spurkranz vorgespannt und mittels über den Umfang verteilter Befestigungsschrauben (5) am Kopf (7) des Scheibenradkörpers (3) lösbar befestigt. Die Kontaktflächen zwischen dem Spannring (4) und dem Scheibenradkörper (3) sind mit einer dauerhaften und vorzugsweise in die Flächen eingelagerten Beschichtung (12) versehen.

Die Radnabe (6) des Schienenrades wird auf eine Achse (11) aufgezogen und kann hydraulisch über den Stutzen (10) von der Achse (11) gelöst werden.

In Fig. 2 ist zusätzlich zwischen Gummiring (2) und Radreifen (1) ein Ring (13) aus Leichtmetall, vorzugsweise Aluminium eingefügt.

### Bezugszeichenliste:

- 1: Radreifen
- 2: Gummiring
- 3: Scheibenradkörper
- 4: Spannring
- 5: Befestigungsschrauben
- 6: Radnabe
- 7: Kopf von 3
- 8: Aussparungen in 1
- 9: Nuten in 3 bzw. 7
- 10: Stutzen für Hydraulikanschluß
- 11: Achse
- 12: Beschichtung
- 13: Ring

## Patentansprüche

1. Gummigefedertes mehrteiliges Schienenrad mit zwischen dem aus Stahl geschmiedeten Radreifen (1) und dem Scheibenradkörper (3) angeordneten mehrteiligen Gummiringen (2), wobei mindestens ein Gummiring (2) mit einem Spannring (4) zwischen dem geschmiedeten Radreifen (1) und dem Scheibenradkörper (3) verspannt ist und der Spannring (4) mit Befestigungsschrauben (5) am Umfang des Scheibenradkörpers (3) lösbar befestigt ist,
**dadurch gekennzeichnet, daß** der Scheibenradkörper (3) und die Radnabe (6) aus einem nichteisenhaltigen Werkstoff oder einem Verbundwerkstoff bestehen und daß auch der Spannring (4) aus einem nichteisenhaltigen Werkstoff oder einem Verbundwerkstoff besteht.

2. Gummigefedertes Schienenrad nach Anspruch 1,
**dadurch gekennzeichnet, daß** zur Trennung der Kontaktflächen des Spannrings (4) und des Scheibenradkörpers (3) mindestens eine der beiden Flächen mit einer Beschichtung (12) versehen ist, die in die Flächen eingelagert und mit ihnen verbunden ist.

3. Gummigefedertes Schienenrad nach Anspruch 1 oder 2,
**dadurch gekennzeichnet, daß** zwischen dem Radreifen (1) und den Gummiringen (2) zusätzlich ein Ring (13) aus einem nichteisenhaltigen Werkstoff oder einem Verbundwerkstoff angeordnet ist.

## Claims

1. Rubber-sprung multi-part railway wheel with multi-part rubber (2) rings arranged between the wheel tyre (1), forged from steel, and the disc wheel body (3), at least one rubber ring (2) being braced by a clamping ring (4) between the forged wheel tyre (1) and the disc wheel body (3), and the clamping ring (4) being releasably fastened to the circumference of the disc wheel body (3) by fastening bolts (5), **characterized in that** the disc wheel body (3) and the wheel hub (6) consist of a non-ferrous material or a composite material and **in that** the clamping ring (4) also consists of a non-ferrous material or a composite material.

2. Rubber-sprung railway wheel according to Claim 1, **characterized in that**, for separating the contact surfaces of the clamping ring (4) and of the disc wheel body (3), at least one of the two surfaces is provided with a coating (12), which is incorporated into the surfaces and bonded with them.

3. Rubber-sprung railway wheel according to Claim 1 or 2, **characterized in that** a ring (13) of a non-ferrous material or a composite material is additionally arranged between the wheel tyre (1) and the rubber rings (2).

## Revendications

1. Roue de véhicule ferroviaire à suspension par caoutchouc, comprenant des anneaux de caoutchouc (2) en plusieurs pièces, disposés entre le bandage de roue (1) en acier forgé et le corps de roue ou voile (3), au moins un anneau en caoutchouc (2) étant serré à l'aide d'un anneau de serrage (4) entre le bandage de roue forgé (1) et le corps de roue ou voile (3), et l'anneau de serrage (4) est fixé à la périphérie du corps de roue ou voile (3) de façon démontable au moyen de vis de fixation (5),
**caractérisé en ce que** le corps de roue ou voile (3) et le moyeu de roue (6) sont composés d'une matière non ferreuse ou d'une matière composite et **en ce que** l'anneau de serrage (4) est fait d'une matière non ferreuse ou d'une matière composite.

2. Roue de véhicule ferroviaire à suspension par caoutchouc selon la revendication 1,
**caractérisée en ce que**, pour séparer les surfaces de contact de l'anneau de serrage (4) et du corps de roue ou voile (3), au moins une des deux surfaces est munie d'un revêtement (12) qui est encastré dans les surfaces et fixé à ces dernières.

3. Roue de véhicule ferroviaire à suspension par caoutchouc selon la revendication 1 ou 2,
**caractérisée en ce qu'**un anneau (13) fait d'une matière non ferreuse ou d'une matière composite est disposé en supplément entre le bandage de roue (1) et les anneaux en caoutchouc (2).
